# EUROPEAN PATENT APPLICATION

(11) **EP 3 805 981 A1**
(43) Date of publication of application: **14.04.2021**
(21) Application number: 19812180.8
(22) Date of filing: 16.01.2019
(51) Int. Cl.: G06K 9/00

(54) **METHOD AND APPARATUS FOR PLANNING OPERATION IN TARGET REGION, STORAGE MEDIUM, AND PROCESSOR**

(30) Priority: 28.05.2018 CN 201810525552
(71) Applicant: Guangzhou Xaircraft Technology Co., Ltd, Tianhe District Guangzhou, Guangdong 510000 (CN)
(72) Inventor: DAI, Shuangliang, Guangdong 510000 (CN)
(74) Representative: Penza, Giancarlo
(86) International application number: PCT/CN2019/071998
(87) International publication number: WO 2019/227948

(57) **Abstract**

A target region operation planning method and apparatus, a storage medium and a processor are provided. The method includes: acquiring map image information of a target region to be operated; identifying, from the map image information, a plurality of sub-regions contained in the target region to be operated, wherein the plurality of sub-regions correspond to a plurality of objects to be operated; and planning, according to the plurality of sub-regions, an action path of an operation device in the target region to be operated to control the operation device to traverse the plurality of sub-regions when operating along the action path. The technical problem that an orchard plant protection mode used in the related art is likely to cause waste of resources and is relatively costly is solved in the present invention.

## Description

### Technical Field

The present invention relates to the field of computers, and in particular, to a target region operation planning method and apparatus, a storage medium, and a processor.

### Background

China is a great fruit industry country. In recent years, a planting area and output of fruit have been ranked first in the world, and it is also the world's largest fruit consumer. In order to ensure healthy and orderly development of the fruit industry, mechanized orchard plant protection will be an important research topic to promote the development of the fruit industry. Orchard plant protection is mainly concerned with prevention and control of plant diseases and insect pests of fruit trees. Proper fruit tree management can produce high-quality fruits. Compared with farmland plant protection, density of plants in orchards is lower. When a field operation mode is adopted, it is easy to cause waste of pesticides and water resources. However, when a manual precision positioning mode is adopted, additional procedures will be added to plant protection, and more manpower, material and financial resources will be wasted.

An effective solution has not been proposed yet currently for the foregoing problem.

### Summary

At least some embodiments of the present invention provide a target region operation planning method and apparatus, a storage medium, and a processor, so as to at least solve a technical problem that an orchard plant protection mode used in the related art is likely to cause waste of resources and is relatively costly.

In one embodiment of the present invention, a target region operation planning method is provided, which may include:
map image information of a target region to be operated is acquired; multiple sub-regions contained in the target region to be operated are identified from the map image information, the multiple sub-regions corresponding to multiple objects to be operated; and an action path of an operation device in the target region to be operated is planned according to the multiple sub-regions to control the operation device to traverse the multiple sub-regions when operating along the action path.

Optionally, the operation that multiple sub-regions contained in the target region to be operated are identified from the map image information may include: a geometric center position of each sub-region and an outer contour of each sub-region in the multiple sub-regions are identified from the map image information.

Optionally, when the outer contour is a circle, the geometric center position may be a center position of the circle; when the outer contour is a rectangle, the geometric center position may be a center position of the rectangle; when the outer contour is an ellipse, the geometric center position may be a center position of the ellipse; and when the outer contour is an irregular shape, the geometric center position may be a centroid position of the irregular shape.

Optionally, the operation that the action path of the operation device in the target region to be operated is planned according to the multiple sub-regions may include: a transition path for traversing the multiple objects to be operated in the target region to be operated is generated based on the geometric center position of each sub-region in the multiple sub-regions; operation paths of the multiple objects to be operated are planned based on the outer contour of each sub-region in the multiple sub-regions; and the operation paths are added to the transition path to generate the action path of the operation device in the target region to be operated.

Optionally, the operation that the transition path for traversing the multiple objects to be operated in the target region to be operated is generated based on the geometric center position of each sub-region in the multiple sub-regions may include: at a selection step, selecting a sub-region closest to a take-off position of the operation device from the multiple sub-regions as an initial sub-region; at an establishment step, sequentially searching, starting from a geometric center position of the initial sub-region, for geometric center positions of adjacent sub-regions closest to a current sub-region, and establishing a transition path between the adjacent geometric center positions; and at a determination step, determining whether there are sub-regions which are not yet connected, and when there are sub-regions which are not yet connected, returning to the establishment step until the transition path for traversing the multiple objects to be operated is generated.

Optionally, the operation that operation paths of the multiple objects to be operated are planned based on the outer contour of each sub-region in the multiple sub-regions may include: at a determination step, determining, according to an outer contour of a current sub-region selected from the multiple sub-regions, an actual area of the current sub-region; at a first determination step, adopting, when the actual area is less than a preset area, a fixed-point rotation operation path, and adopting, when the actual area is greater than or equal to the preset area, at least one of a spiral operation path and a round-trip operation path; and at a second determination step, determining whether the multiple sub-regions are all planned, and when not all the plurality of sub-regions are planned, returning to the determination step to plan an operation path for an object to be operated in a next sub-region adjacent to the current sub-region, until operation paths of the multiple objects to be operated are all planned.

Optionally, the first determination step may include: the preset area is determined according to an operation width of the operation device, when a maximum diameter of the current sub-region is less than the operation width, the fixed-point rotation operation path is adopted, and when the maximum diameter of the current sub-region is greater than or equal to the operation width, at least one of the spiral operation path and the round-trip operation path is adopted.

Optionally, when an overlapping area of at least two adjacent sub-regions is greater than or equal to a preset threshold, or when an overlapping area of at least two adjacent sub-regions is greater than or equal to a preset proportion, the at least two adjacent sub-regions may be determined as one sub-region.

Optionally, before the operation device is controlled to traverse the multiple sub-regions when operating along the action path, the method may further include: a first height, a second height, a third height, and a fourth height are acquired, wherein the first height is a surveyed altitude of each object to be operated, the second height is a take-off point altitude of the operation device, the third height is a height of each object to be operated, and the fourth height is a preset height increased on the basis of the height of each object to be operated; and an actual flying height of the operation device is calculated using the first height, the second height, the third height, and the fourth height.

In another embodiment of the present invention, a target region operation planning apparatus is also provided, which may include:
a first acquisition component, configured to acquire map image information of a target region to be operated; an identification component, configured to identify, from the map image information, multiple sub-regions contained in the target region to be operated, the multiple sub-regions corresponding to multiple objects to be operated; and a planning component, configured to plan, according to the multiple sub-regions, an action path of an operation device in the target region to be operated to control the operation device to traverse the multiple sub-regions when operating along the action path.

Optionally, the identification component may be configured to identify a geometric center position of each sub-region and an outer contour of each sub-region in the multiple sub-regions from the map image information.

Optionally, when the outer contour is a circle, the geometric center position may be a center position of the circle; when the outer contour is a rectangle, the geometric center position may be a center position of the rectangle; when the outer contour is an ellipse, the geometric center position may be a center position of the ellipse; and when the outer contour is an irregular shape, the geometric center position may be a centroid position of the irregular shape.

Optionally, the planning component may include: a generation element, configured to generate, based on the geometric center position of each sub-region in the multiple sub-regions, a transition path for traversing the multiple objects to be operated in the target region to be operated; a planning element, configured to plan operation paths of the multiple objects to be operated based on the outer contour of each sub-region in the multiple sub-regions; and a processing element, configured to add the operation paths to the transition path to generate the action path of the operation device in the target region to be operated.

Optionally, the generation element may include: a selection sub-element, configured to select a sub-region closest to a take-off position of the operation device from the multiple sub-regions as an initial sub-region; an establishment sub-element, configured to sequentially search, starting from the geometric center position of the initial sub-region, for geometric center positions of adjacent sub-regions closest to a current sub-region, and establish a transition path between the adjacent geometric center positions; and a determination sub-element, configured to determine whether there are sub-regions which are not yet connected, and when there are sub-regions which are not yet connected, return to the establishment sub-element until the transition path for traversing the multiple objects to be operated is generated.

Optionally, the planning element may include: a determination sub-element, configured to determine, according to an outer contour of a current sub-region selected from the multiple sub-regions, an actual area of the current sub-region; a first determination sub-element, configured to adopt, when the actual area is less than a preset area, a fixed-point rotation operation path, and adopt, when the actual area is greater than or equal to the preset area, at least one of a spiral operation path and a round-trip operation path; and a second determination sub-element, configured to determine whether the multiple sub-regions are all planned, and when not all the plurality of sub-regions are planned, return to the determination sub-element to plan an operation path for an object to be operated in a next sub-region adjacent to the current sub-region, until operation paths of the multiple objects to be operated are all planned.

Optionally, the first determination sub-element may be configured to determine the preset area according to an operation width of the operation device, when a maximum diameter of the current sub-region is less than the operation width, adopt the fixed-point rotation operation path, and when the maximum diameter of the current sub-region is greater than or equal to the operation width, adopt at least one of the spiral operation path and the round-trip operation path.

Optionally, when an overlapping area of at least two adjacent sub-regions is greater than or equal to a preset threshold, or when an overlapping area of at least two adjacent sub-regions is greater than or equal to a preset proportion, the at least two adjacent sub-regions may be determined as one sub-region.

Optionally, the apparatus may further include: a second acquisition component, configured to acquire a first height, a second height, a third height, and a fourth height, wherein the first height is a surveyed altitude of each object to be operated, the second height is a take-off point altitude of the operation device, the third height is a height of each object to be operated, and the fourth height is a preset height increased on the basis of the height of each object to be operated; and a calculation component, configured to calculate an actual flying height of the operation device using the first height, the second height, the third height, and the fourth height.

In another embodiment of the present invention, a storage medium is also provided, which may include a stored program. When the program is run, a device where the storage medium is located may be controlled to perform the above target region operation planning method.

In another embodiment of the present invention, a processor is also provided. The processor may be configured to run a program. When the program is run, the above target region operation planning method may be performed.

Through at least some embodiments of the present invention, the map image information of the target region to be operated is acquired, the multiple sub-regions which are contained in the target region to be operated and correspond to the multiple objects to be operated are identified from the map image information, and the action path of the operation device in the target region to be operated is planned according to the multiple sub-regions to control the operation device to traverse the multiple sub-regions when operating along the action path. In actual applications, the target region to be operated may be selected, and then the system will directly generate the action path of the entire target region to be operated according to the position of the selected target region to be operated and obtained high-definition images, thus achieving the technical effects of implementing precise plant protection and reducing a large amount of labor costs, and solving the technical problem that an orchard plant protection mode used in the related art is likely to cause waste of resources and is relatively costly.

### Brief Description of the Drawings

The accompanying drawings described herein are used for providing a further understanding of the present invention, and constitute a part of the present application, and the exemplary embodiments of the present invention and the description thereof are used for explaining the present invention, but do not constitute improper limitations to the present invention. In the drawings:
Fig. 1 is a flowchart of a target region operation planning method according to an embodiment of the present invention.
Fig. 2 is a schematic diagram of a process of extracting part of data from a high-definition map image for labeling according to an exemplary embodiment of the present invention.
Fig. 3 is a schematic diagram of identifying a geometric center position of each sub-region from map image information according to an exemplary embodiment of the present invention.
Fig. 4 is a schematic diagram of a transition path planning process according to an exemplary embodiment of the present invention.
Fig. 5 is a structural block diagram of a target region operation planning apparatus according to an embodiment of the present invention.
Fig. 6 is a structural block diagram of a target region operation planning apparatus according to an exemplary embodiment of the present invention.

### Detailed Description

In order to make those skilled in the art better understand the solution of the present invention, technical solutions in the embodiments of the present invention will be clearly and completely described herein below with the drawings in the embodiments of the present invention. It is apparent that the described embodiments are part of the embodiments of the present invention, not all of the embodiments. Based on the embodiments of the present invention, all other embodiments obtained on the premise of no creative work of those of ordinary skill in the art should fall within the scope of protection of the present invention.

It is to be noted that the specification and claims of the invention and the terms "first", "second" and the like in the drawings are used to distinguish similar objects, and do not need to describe a specific sequence or a precedence order. It will be appreciated that data used in such a way may be exchanged under appropriate conditions, in order that the embodiments of the present invention described here can be implemented in a sequence other than sequences graphically shown or described here. In addition, terms "include" and "have" and any variations thereof are intended to cover non-exclusive inclusions. For example, it is not limited for processes, methods, systems, products or devices containing a series of steps or elements to clearly list those steps or elements, and other steps or elements which are not clearly listed or are inherent to these processes, methods, products or devices may be included instead.

In one embodiment of the present invention, a target region operation planning method is provided. It is to be noted that the steps shown in the flowchart of the drawings may be executed in a computer system including, for example, a set of computer-executable instructions. Moreover, although a logic sequence is shown in the flowchart, the shown or described steps may be executed in a sequence different from the sequence here under certain conditions.

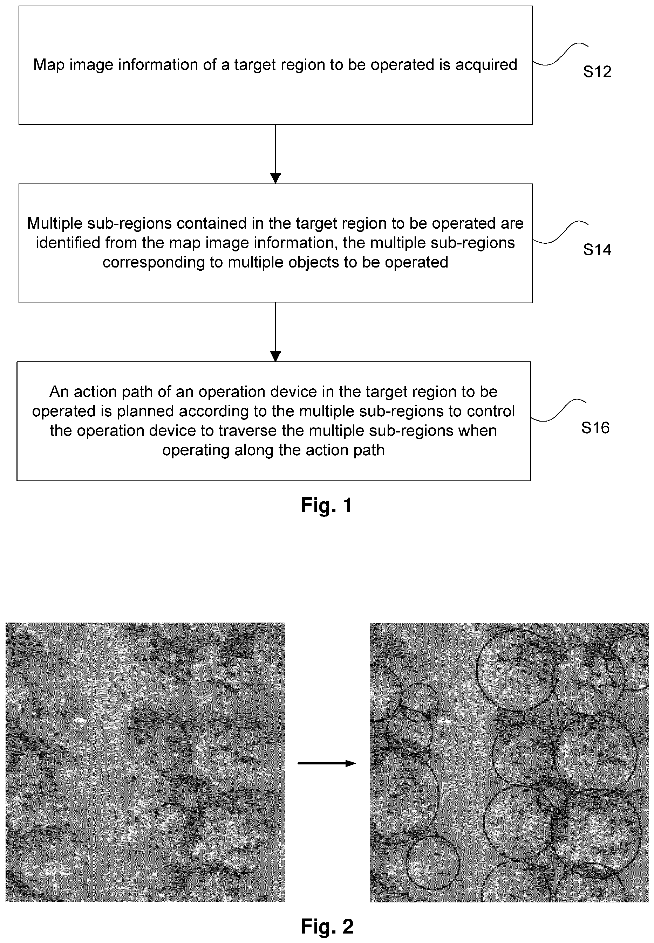

Fig. 1 is a flowchart of a target region operation planning method according to an embodiment of the present invention. As shown in Fig. 1, the method includes the following steps.

In step S12, map image information of a target region to be operated is acquired.

In step S14, multiple sub-regions contained in the target region to be operated are identified from the map image information. The multiple sub-regions correspond to multiple objects to be operated.

In step S16, an action path of an operation device in the target region to be operated is planned according to the multiple sub-regions to control the operation device to traverse the multiple sub-regions when operating along the action path.

Through the above steps, the map image information of the target region to be operated is acquired, the multiple sub-regions which are contained in the target region to be operated and correspond to the multiple objects to be operated are identified from the map image information, and the action path of the operation device in the target region to be operated is planned according to the multiple sub-regions to control the operation device to traverse the multiple sub-regions when operating along the action path. In actual applications, the target region to be operated may be selected, and then the system will directly generate the action path of the entire target region to be operated according to the position of the selected target region to be operated and obtained high-definition images, thus achieving the technical effects of implementing precise plant protection and reducing a large amount of labor costs, and solving the technical problem that an orchard plant protection mode used in the related art is likely to cause waste of resources and is relatively costly.

The above method is usually applied to a control terminal for remotely controlling an unmanned aerial vehicle to operate. The above map images include two-dimensional maps, three-dimensional maps, DSM maps, pictures, movies, pictures, etc. The target region to be operated may include, but is not limited to: an orchard plant protection region (for example, an apple orchard plant protection region), a fruit picking region (for example, an apple picking region), a fruit pruning region (for example, a grape pruning region and a cotton pruning region), and a field region (a wheat field harvesting region). The target region to be operated contains multiple objects to be operated. For example, when the region to be operated is an orchard, the object to be operated is a fruit tree. When the target region to be operated is a field, the object to be operated is a piece of crops such as wheat. The above operation device may be an unmanned aerial vehicle with a plant protection function, or may be a ground operation device such as a tractor. The following optional embodiments will mainly take an orchard plant protection region as an example for explanation.

Optionally, in step S14, the operation that multiple sub-regions contained in the target region to be operated are identified from the map image information may include the following execution steps.

In step S141, a geometric center position of each sub-region and an outer contour of each sub-region in the multiple sub-regions are identified from the map image information.

Specifically, when the outer contour is a circle, the geometric center position may be a center position of the circle. When the outer contour is a rectangle, the geometric center position may be a center position of the rectangle. When the outer contour is an ellipse, the geometric center position may be a center position of the ellipse. When the outer contour is an irregular shape, the geometric center position may be a centroid position of the irregular shape. In order to identify the above geometric center position, it is usually necessary to further label in a map image. The present invention does not limit the labeling form, as long as the outer contour and the center position can be identified. For example, three points are used to label a circle. Those skilled in the art can understand that when three points are labeled, the outer contour and center of the circle may be obtained according to a usual algorithm. For another example, a rectangular frame is used for labeling the rectangular region, four points are also used for labeling the rectangular region, the center of the circle is also used for labeling the center of the circular region, and a circular frame is used for labeling the outer contour of the center region.

In an optional embodiment, first, a surveying and mapping unmanned aerial vehicle or an aerial photography unmanned aerial vehicle is used to acquire a high-definition map image. Then, in view of a large amount of data contained in the acquired map image, it is necessary to extract part of the data (namely part of the image with higher visibility) from the acquired map image for labeling as a training set. The labeling mode is based on high-definition map images collected by unmanned aerial vehicles. First, the edge of each fruit tree is manually labeled with a preset shape (such as a circle), and then corresponding circular frame data is automatically generated by a terminal. The circular frame data may include, but is not limited to: a true center position and radius data of each fruit tree in the high-definition map image.

Fig. 2 is a schematic diagram of a process of extracting part of data from a high-definition map image for labeling according to an exemplary embodiment of the present invention. As shown in Fig. 2, the left side is an original input image, and the right side is an image labeled by extracting a more visible part of the data from the original image. The circular line that appears in the image on the right side is data of a labeled boundary.

On this basis, a deep network model is mainly obtained by repeated training based on the above circular-labeled target detection. The specific process is as follows: first, an original image (usually an RGB image with a resolution of 256×256) is used as an input item, and a feature map (usually a small and layered abstract graph with a resolution of 16×16) is obtained through a Convolutional Neural Network (CNN). The CNN is a pre-trained classification network. In addition, considering that as the level of the feature map is higher, the extracted features are more abstract, while the distribution of fruit trees in the orchard is relatively dense. For this reason, in an optional embodiment provided by the present invention, a feature map in a bottom layer (that is, a lower level) is used, so that a target object (that is, each fruit tree) can be more easily detected. Secondly, convolution processing with a core of one is performed on the feature map to output position information (loc) and the probabilities of all target classes (logits (c₁, c₂,...cₚ)). loc may be expressed as A(cx, cy, radius), where cx, cy represent a center point of a target circle, and radius represents an offset value of the radius. logits is mainly used to distinguish fruit trees from other objects and background.

After obtaining the above calculation results, a classification loss value and a circle regression loss value may also be calculated according to the above circle data respectively, and then the gradient reverse transfer processing is performed to optimize model parameters. The specific calculation process is shown in the following formula: ${L}_{loc} = {\sum }_{i ∈ P}^{N} {\sum }_{m ∈ \left\{cx, cy, r\right\}} {smooth}_{L 1} \left({l}_{i}^{m}-{\hat{g}}_{j}^{m}\right)$ ${\hat{g}}_{j}^{cx} = \left({g}_{j}^{cx}-{d}_{i}^{cx}\right) / {d}_{i}^{r}$ ${\hat{g}}_{j}^{cy} = \left({g}_{j}^{cy}-{d}_{i}^{cy}\right) / {d}_{i}^{r}$ ${\hat{g}}_{j}^{r} = log \left(\frac{{g}_{j}^{r}}{{d}_{i}^{r}}\right)$ ${L}_{conf} = - {\sum }_{i ∈ P}^{N} log \left(\frac{exp \left({c}_{i}^{p}\right)}{{\sum }_{p} exp \left({c}_{i}^{p}\right)}\right) - {\sum }_{i ∈ Neg} log \left(\frac{exp \left({c}_{i}^{0}\right)}{{\sum }_{p} exp \left({c}_{i}^{0}\right)}\right)$

P is a positive target (the target is a fruit tree), Neg is a negative target (the target is the background), I is a true parameter of a labeled circle, g is a predicted parameter of the labeled circle, d is a default circle parameter, and smooth L1 is a loss function.

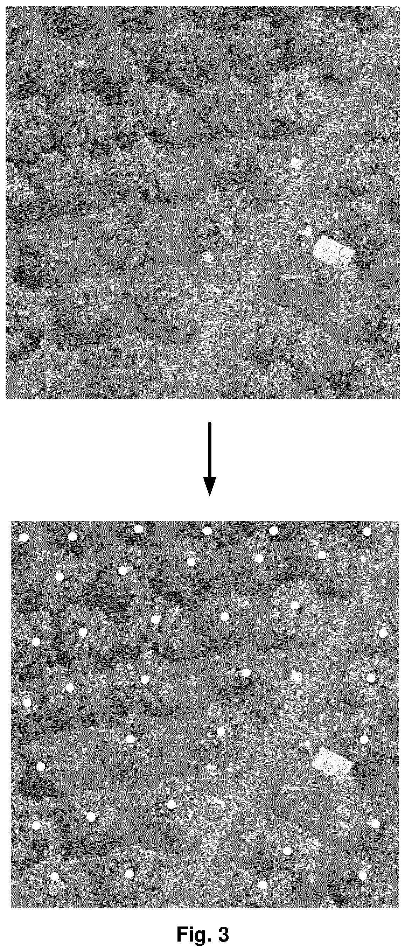

Fig. 3 is a schematic diagram of identifying a geometric center position of each sub-region from map image information according to an exemplary embodiment of the present invention. As shown in Fig. 3, by repeatedly training and modifying the above deep network model, the system can accurately identify and label the geometric center position of each of the multiple sub-regions from the map image information by using an AI image identification technology according to an input orchard high-definition map image. In the subsequent planning process, the action path planning can be completed by using the geometric center position of each fruit tree.

It is to be noted that in the above optional embodiment, when an overlapping area of at least two adjacent sub-regions is greater than or equal to a preset threshold, or when an overlapping area of at least two adjacent sub-regions is greater than or equal to a preset proportion, the at least two adjacent sub-regions may be determined as one sub-region.

Optionally, in step S16, the operation that the action path of the operation device in the target region to be operated is planned according to the multiple sub-regions may include the following execution steps.

In step S161, a transition path for traversing the multiple objects to be operated in the target region to be operated is generated based on the geometric center position of each sub-region in the multiple sub-regions.

In step S162, operation paths of the multiple objects to be operated are planned based on the outer contour of each sub-region in the multiple sub-regions.

In step S163, the operation paths are added to the transition path to generate the action path of the operation device in the target region to be operated.

In an optional embodiment of the present invention, first, the geometric center position of each fruit tree is accurately identified from the high-definition images of an orchard to be operated through the above deep learning and computer vision. Secondly, a transition path for traversing each fruit tree in the orchard to be operated is generated according to pixel coordinates of the geometric center position of each sub-region in the multiple sub-regions. The transition path is used for determining the sequential spraying sequence of each fruit tree in the entire orchard. Then, an operation path of each fruit tree is planned according to the outer contour of each sub-region. The operation path is used for determining the medicine spraying mode of each fruit tree in the entire orchard. Finally, by combining the transition path with the operation path, a complete set of action paths that can spray all the fruit trees in the entire orchard is formed.

Optionally, in step S161, the operation that the transition path for traversing the multiple objects to be operated in the target region to be operated is generated based on the geometric center position of each sub-region in the multiple sub-regions may include the following execution steps.

In step S1611, a sub-region closest to a take-off position of the operation device is selected from the multiple sub-regions as an initial sub-region.

In step S1612, starting from a geometric center position of the initial sub-region, geometric center positions of adjacent sub-regions closest to a current sub-region are sequentially searched, and a transition path is established between the adjacent geometric center positions.

In step S1613, it is determined whether there are sub-regions which are not yet connected, and when there are sub-regions which are not yet connected, step S1612 is returned until a transition path for traversing the multiple objects to be operated is generated.

In the process of generating the transition path, first, an unmanned aerial vehicle may select a sub-region with the geometric center position closest to a take-off position of the unmanned aerial vehicle from multiple sub-regions as an initial sub-region. Secondly, starting from the geometric center position of the initial sub-region, according to the shortest path algorithm, a sub-region closest to the current geometric center position is selected from one or more adjacent geometric center positions. And then, a line is adopted between the current sub-region and the selected adjacent sub-region to establish a transition path between the two geometric center positions. Finally, by connecting all the geometric center positions labeled in a high-definition image without repetition, the transition path that the unmanned aerial vehicle travels between the fruit trees in the entire orchard is obtained.

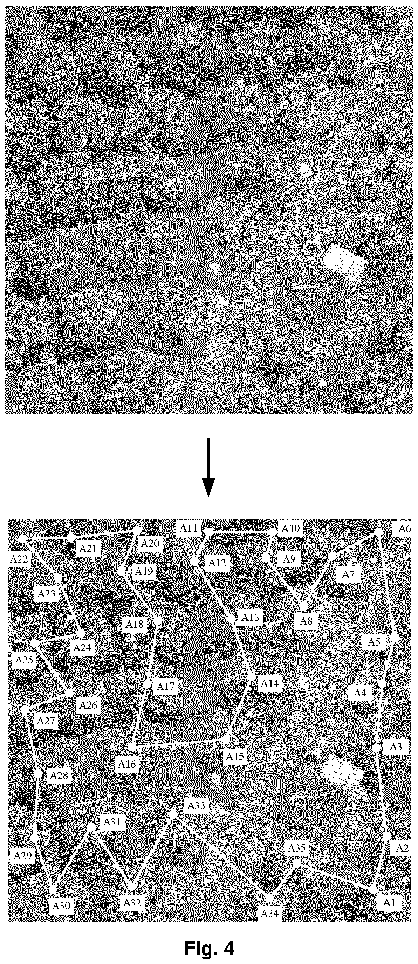

Fig. 4 is a schematic diagram of a transition path planning process according to an exemplary embodiment of the present invention. As shown in Fig. 4, by inputting an original image, geometric center positions (A1, A2, ..., A35) of the fruit trees in the orchard are obtained. After that, the fruit tree closest to the take-off position of the unmanned aerial vehicle may be used as a starting point of departure. Assuming that the fruit tree closest to the take-off position of the unmanned aerial vehicle is the fruit tree at the location of A1, the sub-region where A1 is located is an initial sub-region. Starting from the geometric center position A1 of the initial sub-region, a geometric center position A2 of the adjacent sub-region closest to the sub-region where A1 is located is searched, and a transition path (which is essentially a segmented path) is established between A1 and A2. Secondly, it is determined whether there are sub-regions which are not yet connected (that is, the geometric center position that is not connected is searched). By searching, it is found that a geometric center position A3 of the adjacent sub-region closest to the sub-region where A2 is located is not connected yet. Therefore, it is necessary to establish a transition path between A1 and A2. Then, it is determined whether there are sub-regions which are not yet connected. By searching, it is found that a geometric center position A4 of the adjacent sub-region closest to the sub-region where A3 is located is not connected yet. Therefore, it is necessary to establish a transition path between A3 and A4. By analogy, until A1 to A35 are all connected, the transition path that traverses all fruit trees in the orchard is finally obtained.

Optionally, in step S162, the operation that operation paths of the multiple objects to be operated are planned based on the outer contour of each sub-region in the multiple sub-regions may include the following execution steps.

In step S1621, according to an outer contour of a current sub-region selected from the multiple sub-regions, an actual area of the current sub-region is determined.

In step S1622, when the actual area is less than a preset area, a fixed-point rotation operation path is adopted, and when the actual area is greater than or equal to the preset area, at least one of a spiral operation path and a round-trip operation path is adopted.

In step S1623, it is determined whether the multiple sub-regions are all planned, and when not all the plurality of sub-regions are planned, step S1621 is returned to plan an operation path for an object to be operated in a next sub-region adjacent to the current sub-region, until operation paths of the multiple objects to be operated are all planned.

In an optional implementation process, a preset area may be determined according to an operation width of the operation device (usually 1.5m-3m). When the maximum diameter of the current sub-region is less than the operation width, the fixed-point rotation operation path may be adopted. For example, the unmanned aerial vehicle is controlled to hover over the sky corresponding to the geometric center position of the current sub-region, and pesticides are sprayed on the current fruit tree through rotation operation.

When the maximum diameter of the current sub-region is greater than or equal to the operation width, at least one of the spiral operation path and the round-trip operation path is adopted. Specifically, the spiral operation path is particularly suitable for fruit tree plant protection services in hilly areas, and the spraying path can be automatically planned based on surveying and mapping information and the growth of fruit trees. When the crown diameter of the fruit tree is small, the unmanned aerial vehicle will spin over the fruit tree to spray. When the crown diameter of the fruit tree is large, the unmanned aerial vehicle will fly above the fruit tree, centered on the crown, and fly from the center to the periphery along a mosquito coil route. In addition, the unmanned aerial vehicle will open a sprinkler to spray when the unmanned aerial vehicle flies over the fruit tree to perform the route of the unmanned aerial vehicle. In other time periods, the sprinkler is closed to ensure that pesticides are effectively sprayed on the leaves. In addition, by adopting a round-trip operation path, the unmanned aerial vehicle may be controlled to spray pesticides on the current fruit trees in a round-trip square wave or a round-trip wave operation above the current sub-region.

Optionally, in step S16, before the operation device is controlled to traverse the multiple sub-regions when operating along the action path, the method may further include the following execution steps.

In step S17, a first height, a second height, a third height, and a fourth height are acquired, wherein the first height is a surveyed altitude of each object to be operated, the second height is a take-off point altitude of the operation device, the third height is a height of each object to be operated, and the fourth height is a preset height increased on the basis of the height of each object to be operated.

In step S18, an actual flying height of the operation device is calculated using the first height, the second height, the third height, and the fourth height.

When the fruit tree is in a mountainous region, not only the height of the fruit tree may be considered, but also the actual altitude of the fruit tree may be considered. The actual altitude of the fruit tree may be determined either through a three-dimensional Digital Surface Model (DSM) map or based on surveying and mapping data. The height of the fruit tree may be measured manually, and of course may also be determined by a distance sensor of an operation machine. It can be seen that the planning of the action path is actually three-dimensional.

In the process of fruit tree plant protection navigation, the unmanned aerial vehicle may use a real-time differential positioning (RTK) navigation component of a Global Navigation Satellite System (GNSS) to provide altitude data for the unmanned aerial vehicle to carry out a fixed altitude flight. The flying height is affected by the height of the crop and the surrounding environment. Generally, the flying height is 1.5-2.5 meters away from the plant canopy. When the height is fixed using RTK, a suitable height is selected by referring to the terrain difference.

When surveying and mapping personnel use a surveying and mapping device to carry out fixed-point route surveying of fruit trees, the surveying and mapping device can not only record longitude and latitude information, but also record elevation information. Therefore, a surveyor may maintain a vertical touchdown state during the surveying and mapping process to ensure that the collected elevation data is accurate. In this process, the flight altitude of the unmanned aerial vehicle for each fruit tree is calculated based on the altitude of the horizontal plane of the take-off point in conjunction with the fruit tree surveying and mapping altitude, the fruit tree height and the height from the treetop. The specific calculation formula is as follows:
flying height of unmanned aerial vehicle = (fruit tree surveying and mapping altitude - altitude of horizontal plane of take-off point) + (fruit tree height + height from treetop).

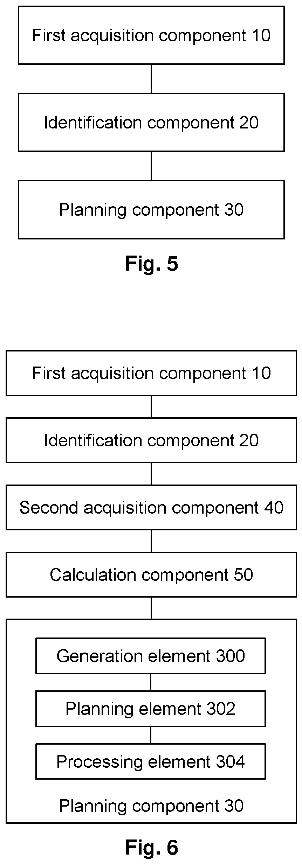

In another embodiment of the present invention, an embodiment of a target region operation planning apparatus is provided. Fig. 5 is a structural block diagram of a target region operation planning apparatus according to an embodiment of the present invention. As shown in Fig. 5, the apparatus includes: a first acquisition component 30, configured to acquire map image information of a target region to be operated; an identification component, configured to identify, from the map image information, multiple sub-regions contained in the target region to be operated, the multiple sub-regions corresponding to multiple objects to be operated; and a planning component, configured to plan, according to the multiple sub-regions, an action path of an operation device in the target region to be operated to control the operation device to traverse the multiple sub-regions when operating along the action path.

Optionally, the identification component 20 is configured to identify a geometric center position of each sub-region and an outer contour of each sub-region in the multiple sub-regions from the map image information.

Optionally, when the outer contour is a circle, the geometric center position is a center position of the circle; when the outer contour is a rectangle, the geometric center position is a center position of the rectangle; when the outer contour is an ellipse, the geometric center position is a center position of the ellipse; and when the outer contour is an irregular shape, the geometric center position is a centroid position of the irregular shape.

Optionally, Fig. 6 is a structural block diagram of a target region operation planning apparatus according to an exemplary embodiment of the present invention. As shown in Fig. 6, the planning component 30 includes: a generation element 300, configured to generate, based on the geometric center position of each sub-region in the multiple sub-regions, a transition path for traversing the multiple objects to be operated in the target region to be operated; a planning element 302, configured to plan operation paths of the multiple objects to be operated based on the outer contour of each sub-region in the multiple sub-regions; and a processing element 304, configured to add the operation paths to the transition path to generate the action path of the operation device in the target region to be operated.

Optionally, the generation element 300 includes: a selection sub-element (not shown), configured to select a sub-region closest to a take-off position of the operation device from the multiple sub-regions as an initial sub-region; an establishment sub-element (not shown), configured to sequentially search, starting from the geometric center position of the initial sub-region, for geometric center positions of adjacent sub-regions closest to a current sub-region, and establish a transition path between the adjacent geometric center positions; and a determination sub-element (not shown), configured to determine whether there are sub-regions which are not yet connected, and when there are sub-regions which are not yet connected, return to the establishment sub-element until the transition path for traversing the multiple objects to be operated is generated.

Optionally, the planning element 302 includes: a determination sub-element (not shown), configured to determine, according to an outer contour of a current sub-region selected from the multiple sub-regions, an actual area of the current sub-region; a first determination sub-element (not shown), configured to adopt, when the actual area is less than a preset area, a fixed-point rotation operation path, and adopt, when the actual area is greater than or equal to the preset area, at least one of a spiral operation path and a round-trip operation path; and a second determination sub-element (not shown), configured to determine whether the multiple sub-regions are all planned, and when not all the plurality of sub-regions are planned, return to the determination sub-element to plan an operation path for an object to be operated in a next sub-region adjacent to the current sub-region, until operation paths of the multiple objects to be operated are all planned.

Optionally, the first determination sub-element (not shown) is configured to determine the preset area according to an operation width of the operation device, when a maximum diameter of the current sub-region is less than the operation width, adopt the fixed-point rotation operation path, and when the maximum diameter of the current sub-region is greater than or equal to the operation width, adopt at least one of the spiral operation path and the round-trip operation path.

Optionally, when an overlapping area of at least two adjacent sub-regions is greater than or equal to a preset threshold, or when an overlapping area of at least two adjacent sub-regions is greater than or equal to a preset proportion, the at least two adjacent sub-regions are determined as one sub-region.

Optionally, as shown in Fig. 6, the apparatus further includes: a second acquisition component 40, configured to acquire a first height, a second height, a third height, and a fourth height, wherein the first height is a surveyed altitude of each object to be operated, the second height is a take-off point altitude of the operation device, the third height is a height of each object to be operated, and the fourth height is a preset height increased on the basis of the height of each object to be operated; and a calculation component 50, configured to calculate an actual flying height of the operation device using the first height, the second height, the third height, and the fourth height.

In another embodiment of the present invention, a computer terminal may be also provided. In the present embodiment, the computer terminal may include: one or more processors and a memory.

The memory may be configured to store a software program and a component, such as a program instruction/component corresponding to the security vulnerability detection method and apparatus in the embodiments of the present invention. The processor executes various functional applications and data processing by running the software program and component stored in the memory, that is, the target region operation planning method is implemented. The memory may include a high speed random access memory and may also include a non-volatile memory such as one or more magnetic storage devices, a flash memory, or other non-volatile solid state memories. In some examples, the memory may further include memories remotely located relative to the processor, which may be connected to the terminal over a network. The examples of such networks include, but are not limited to, the Internet, the Intranet, local area networks, mobile communication networks, and combinations thereof.

The processor may further execute a program code of the following steps: map image information of a target region to be operated is acquired; multiple sub-regions contained in the target region to be operated are identified from the map image information, the multiple sub-regions corresponding to multiple objects to be operated; and an action path of an operation device in the target region to be operated is planned according to the multiple sub-regions to control the operation device to traverse the multiple sub-regions when operating along the action path.

Optionally, the processor may further execute a program code of the following steps: a geometric center position of each sub-region and an outer contour of each sub-region in the multiple sub-regions are identified from the map image information.

Optionally, the processor may further execute a program code of the following steps: a transition path for traversing the multiple objects to be operated in the target region to be operated is generated based on the geometric center position of each sub-region in the multiple sub-regions; operation paths of the multiple objects to be operated are planned based on the outer contour of each sub-region in the multiple sub-regions; and the operation paths are added to the transition path to generate the action path of the operation device in the target region to be operated.

Optionally, the processor may further execute a program code of the following steps: at a selection step, selecting a sub-region closest to a take-off position of the operation device from the multiple sub-regions as an initial sub-region; at an establishment step, sequentially searching, starting from a geometric center position of the initial sub-region, for geometric center positions of adjacent sub-regions closest to a current sub-region, and establishing a transition path between the adjacent geometric center positions; and at a determination step, determining whether there are sub-regions which are not yet connected, and when there are sub-regions which are not yet connected, returning to the establishment step until the transition path for traversing the multiple objects to be operated is generated.

Optionally, the processor may further execute a program code of the following steps: at a determination step, determining, according to an outer contour of a current sub-region selected from the multiple sub-regions, an actual area of the current sub-region; at a first determination step, adopting, when the actual area is less than a preset area, a fixed-point rotation operation path, and adopting, when the actual area is greater than or equal to the preset area, at least one of a spiral operation path and a round-trip operation path; and at a second determination step, determining whether the multiple sub-regions are all planned, and when not all the plurality of sub-regions are planned, returning to the determination step to plan an operation path for an object to be operated in a next sub-region adjacent to the current sub-region, until operation paths of the multiple objects to be operated are all planned.

Optionally, the processor may further execute a program code of the following steps: the preset area is determined according to an operation width of the operation device, when a maximum diameter of the current sub-region is less than the operation width, the fixed-point rotation operation path is adopted, and when the maximum diameter of the current sub-region is greater than or equal to the operation width, at least one of the spiral operation path and the round-trip operation path is adopted.

Optionally, the processor may further execute a program code of the following steps: a first height, a second height, a third height, and a fourth height are acquired, wherein the first height is a surveyed altitude of each object to be operated, the second height is a take-off point altitude of the operation device, the third height is a height of each object to be operated, and the fourth height is a preset height increased on the basis of the height of each object to be operated; and an actual flying height of the operation device is calculated using the first height, the second height, the third height, and the fourth height.

Those of ordinary skill in the art can understand that the computer terminal may be any computer terminal device in a computer terminal group. Of course, the computer terminal may also be a terminal device such as a smart phone (such as an Android phone or an iOS phone), a tablet, a pocket computer, a Mobile Internet Device (MID), and a PAD. Optionally, in the present embodiment, the computer terminal may be located in at least one of multiple network devices in a computer network.

Those of ordinary skill in the art can understand that all or part of the steps in various methods of the above embodiments may be completed by a program to instruct the related hardware of the terminal device. The program may be stored in a computer-readable storage medium. The storage medium may include a flash disk, a Read-Only Memory (ROM), a Random Access Memory (RAM), a magnetic disk or an optical disk, and the like.

In another embodiment of the present invention, a storage medium is also provided. Optionally, in the present embodiment, the above storage medium may be configured to store a program code executed by the target region operation planning method provided in above embodiments.

Optionally, in the present embodiment, the above storage medium may be located in any computer terminal in a computer terminal group in a computer network, or located in any mobile terminal in a mobile terminal group.

Optionally, in the present embodiment, the storage medium is further configured to store a program code for performing the following steps: map image information of a target region to be operated is acquired; multiple sub-regions contained in the target region to be operated are identified from the map image information, the multiple sub-regions corresponding to multiple objects to be operated; and an action path of an operation device in the target region to be operated is planned according to the multiple sub-regions to control the operation device to traverse the multiple sub-regions when operating along the action path.

Optionally, in the present embodiment, the storage medium is further configured to store a program code for performing the following steps: a geometric center position of each sub-region and an outer contour of each sub-region in the multiple sub-regions are identified from the map image information.

Optionally, in the present embodiment, the storage medium is further configured to store a program code for performing the following steps: a transition path for traversing the multiple objects to be operated in the target region to be operated is generated based on the geometric center position of each sub-region in the multiple sub-regions; operation paths of the multiple objects to be operated are planned based on the outer contour of each sub-region in the multiple sub-regions; and the operation paths are added to the transition path to generate the action path of the operation device in the target region to be operated.

Optionally, in the present embodiment, the storage medium is further configured to store a program code for performing the following steps: at a selection step, selecting a sub-region closest to a take-off position of the operation device from the multiple sub-regions as an initial sub-region; at an establishment step, sequentially searching, starting from the geometric center position of the initial sub-region, for geometric center positions of adjacent sub-regions closest to a current sub-region, and establishing a transition path between the adjacent geometric center positions; and at a determination step, determining whether there are sub-regions which are not yet connected, and when there are sub-regions which are not yet connected, returning to the establishment step until the transition path for traversing the multiple objects to be operated is generated.

Optionally, in the present embodiment, the storage medium is further configured to store a program code for performing the following steps: at a determination step, determining, according to an outer contour of a current sub-region selected from the multiple sub-regions, an actual area of the current sub-region; at a first determination step, adopting, when the actual area is less than a preset area, a fixed-point rotation operation path, and adopting, when the actual area is greater than or equal to the preset area, at least one of a spiral operation path and a round-trip operation path; and at a second determination step, determining whether the multiple sub-regions are all planned, and when not all the plurality of sub-regions are planned, returning to the determination step to plan an operation path for an object to be operated in a next sub-region adjacent to the current sub-region, until operation paths of the multiple objects to be operated are all planned.

Optionally, in the present embodiment, the storage medium is further configured to store a program code for performing the following steps: the preset area is determined according to an operation width of the operation device, when a maximum diameter of the current sub-region is less than the operation width, the fixed-point rotation operation path is adopted, and when the maximum diameter of the current sub-region is greater than or equal to the operation width, at least one of the spiral operation path and the round-trip operation path is adopted.

Optionally, in the present embodiment, the storage medium is further configured to store a program code for performing the following steps: a first height, a second height, a third height, and a fourth height are acquired, wherein the first height is a surveyed altitude of each object to be operated, the second height is a take-off point altitude of the operation device, the third height is a height of each object to be operated, and the fourth height is a preset height increased on the basis of the height of each object to be operated; and an actual flying height of the operation device is calculated using the first height, the second height, the third height, and the fourth height.

The above serial numbers of the embodiments of the present invention are for the description, and do not represent the advantages and disadvantages of the embodiments.

In the above embodiments of the present invention, descriptions of each embodiment are emphasized respectively, and parts which are not elaborated in detail in a certain embodiment may refer to relevant descriptions of other embodiments.

In several embodiments provided by the present application, it is to be understood that the disclosed technical content may be implemented in other manners. The apparatus embodiments described above are illustrative. For example, the division of the element may be a logical function division. In actual implementation, there may be another division manner, for example, multiple elements or components may be combined or integrated into another system, or some features may be ignored or not executed. In addition, the coupling or direct coupling or communication connection shown or discussed may be an indirect coupling or communication connection through some interfaces, elements or components, and may be electrical or otherwise.

The elements described as separate components may or may not be physically separated, and the members displayed as elements may or may not be physical elements, that is, may be located in one place, or may be distributed to multiple elements. Some or all of the elements may be selected according to actual needs to achieve the purpose of the solution of the present embodiment.

In addition, each functional element in each embodiment of the present invention may be integrated into a processing element, each element may also physically exist independently, and at least two elements may also be integrated into an element. The integrated element may be implemented in a hardware form and may also be implemented in form of software functional element.

The integrated element may be stored in a computer-readable storage medium when being implemented in the form of a software functional element and sold or used as a standalone product. Based on such understanding, the technical solution of the present invention, which is essential or contributes to the related art, may be embodied in the form of a software product. The computer software product is stored in a storage medium, including a number of instructions for causing a computer device (which may be a personal computer, a server, or a network device, etc.) to perform the methods described in various embodiments of the present invention. The foregoing storage medium includes: a U disk, a Read-Only Memory (ROM), a Random Access Memory (RAM), a mobile hard disk, a magnetic disk, or an optical disk, and the like, which may store a program code.

The above are optional implementations of the present invention. It is to be noted that a number of modifications and refinements may be made by those of ordinary skill in the art without departing from the principles of the present invention, and such modifications and refinements are also considered to be within the scope of protection of the present invention.

## Claims

1. A target region operation planning method, comprising:
acquiring map image information of a target region to be operated;
identifying, from the map image information, a plurality of sub-regions contained in the target region to be operated, wherein the plurality of sub-regions correspond to a plurality of objects to be operated; and
planning, according to the plurality of sub-regions, an action path of an operation device in the target region to be operated to control the operation device to traverse the plurality of sub-regions when operating along the action path.

2. The method as claimed in claim 1, wherein identifying, from the map image information, the plurality of sub-regions contained in the target region to be operated comprises:
identifying a geometric center position of each sub-region and an outer contour of each sub-region in the plurality of sub-regions from the map image information.

3. The method as claimed in claim 2, wherein when the outer contour is a circle, the geometric center position is a center position of the circle; when the outer contour is a rectangle, the geometric center position is a center position of the rectangle; when the outer contour is an ellipse, the geometric center position is a center position of the ellipse; and when the outer contour is an irregular shape, the geometric center position is a centroid position of the irregular shape.

4. The method as claimed in claim 2 or 3, wherein planning, according to the plurality of sub-regions, the action path of the operation device in the target region to be operated comprises:
generating, based on the geometric center position of each sub-region in the plurality of sub-regions, a transition path for traversing the plurality of objects to be operated in the target region to be operated;
planning operation paths of the plurality of objects to be operated based on the outer contour of each sub-region in the plurality of sub-regions; and
adding the operation paths to the transition path to generate the action path of the operation device in the target region to be operated.

5. The method as claimed in claim 4, wherein generating, based on the geometric center position of each sub-region in the plurality of sub-regions, the transition path for traversing the plurality of objects to be operated in the target region to be operated comprises:
at a selection step, selecting a sub-region closest to a take-off position of the operation device from the plurality of sub-regions as an initial sub-region;
at an establishment step, sequentially searching, starting from a geometric center position of the initial sub-region, for geometric center positions of adjacent sub-regions closest to a current sub-region, and establishing a transition path between the adjacent geometric center positions; and
at a determination step, determining whether there are sub-regions which are not yet connected, and when there are sub-regions which are not yet connected, returning to the establishment step until the transition path for traversing the plurality of objects to be operated is generated.

6. The method as claimed in claim 4, wherein planning operation paths of the plurality of objects to be operated based on the outer contour of each sub-region in the plurality of sub-regions comprises:
at a determination step, determining, according to an outer contour of a current sub-region selected from the plurality of sub-regions, an actual area of the current sub-region;
at a first determination step, adopting, when the actual area is less than a preset area, a fixed-point rotation operation path, and adopting, when the actual area is greater than or equal to the preset area, at least one of a spiral operation path and a round-trip operation path; and
at a second determination step, determining whether the plurality of sub-regions are all planned, and when not all the plurality of sub-regions are planned, returning to the determination step to plan an operation path for an object to be operated in a next sub-region adjacent to the current sub-region, until operation paths of the plurality of objects to be operated are all planned.

7. The method as claimed in claim 6, wherein the first determination step comprises:
determining the preset area according to an operation width of the operation device, when a maximum diameter of the current sub-region is less than the operation width, adopting the fixed-point rotation operation path, and when the maximum diameter of the current sub-region is greater than or equal to the operation width, adopting at least one of the spiral operation path and the round-trip operation path.

8. The method as claimed in claim 1, wherein when an overlapping area of at least two adjacent sub-regions is greater than or equal to a preset threshold, or when an overlapping area of at least two adjacent sub-regions is greater than or equal to a preset proportion, the at least two adjacent sub-regions are determined as one sub-region.

9. The method as claimed in claim 1, wherein before controlling the operation device to traverse the plurality of sub-regions when operating along the action path, the method further comprises:
acquiring a first height, a second height, a third height, and a fourth height, wherein the first height is a surveyed altitude of each object to be operated, the second height is a take-off point altitude of the operation device, the third height is a height of each object to be operated, and the fourth height is a preset height increased on the basis of the height of each object to be operated; and
calculating an actual flying height of the operation device using the first height, the second height, the third height, and the fourth height.

10. A target region operation planning apparatus, comprising:
a first acquisition component, configured to acquire map image information of a target region to be operated;
an identification component, configured to identify, from the map image information, a plurality of sub-regions contained in the target region to be operated, wherein the plurality of sub-regions correspond to a plurality of objects to be operated; and
a planning component, configured to plan, according to the plurality of sub-regions, an action path of an operation device in the target region to be operated to control the operation device to traverse the plurality of sub-regions when operating along the action path.

11. The apparatus as claimed in claim 10, wherein the identification component is configured to identify a geometric center position of each sub-region and an outer contour of each sub-region in the plurality of sub-regions from the map image information.

12. The apparatus as claimed in claim 11, wherein when the outer contour is a circle, the geometric center position is a center position of the circle; when the outer contour is a rectangle, the geometric center position is a center position of the rectangle; when the outer contour is an ellipse, the geometric center position is a center position of the ellipse; and when the outer contour is an irregular shape, the geometric center position is a centroid position of the irregular shape.

13. The apparatus as claimed in claim 11 or 12, wherein the planning component comprises:
a generation element, configured to generate, based on the geometric center position of each sub-region in the plurality of sub-regions, a transition path for traversing the plurality of objects to be operated in the target region to be operated;
a planning element, configured to plan operation paths of the plurality of objects to be operated based on the outer contour of each sub-region in the plurality of sub-regions; and
a processing element, configured to add the operation paths to the transition path to generate the action path of the operation device in the target region to be operated.

14. The apparatus as claimed in claim 13, wherein the generation element comprises:
a selection sub-element, configured to select a sub-region closest to a take-off position of the operation device from the plurality of sub-regions as an initial sub-region;
an establishment sub-element, configured to sequentially search, starting from a geometric center position of the initial sub-region, for geometric center positions of adjacent sub-regions closest to a current sub-region, and establish a transition path between the adjacent geometric center positions; and
a determination sub-element, configured to determine whether there are sub-regions which are not yet connected, and when there are sub-regions which are not yet connected, return to the establishment sub-element until the transition path for traversing the plurality of objects to be operated is generated.

15. The apparatus as claimed in claim 13, wherein the planning element comprises:
a determination sub-element, configured to determine, according to an outer contour of a current sub-region selected from the plurality of sub-regions, an actual area of the current sub-region;
a first determination sub-element, configured to adopt, when the actual area is less than a preset area, a fixed-point rotation operation path, and adopt, when the actual area is greater than or equal to the preset area, at least one of a spiral operation path and a round-trip operation path; and
a second determination sub-element, configured to determine whether the plurality of sub-regions are all planned, and when not all the plurality of sub-regions are planned, return to the determination sub-element to plan an operation path for an object to be operated in a next sub-region adjacent to the current sub-region, until operation paths of the plurality of objects to be operated are all planned.

16. The apparatus as claimed in claim 15, wherein the first determination sub-element is configured to determine the preset area according to an operation width of the operation device, when a maximum diameter of the current sub-region is less than the operation width, adopt the fixed-point rotation operation path, and when the maximum diameter of the current sub-region is greater than or equal to the operation width, adopt at least one of the spiral operation path and the round-trip operation path.

17. The apparatus as claimed in claim 10, wherein when an overlapping area of at least two adjacent sub-regions is greater than or equal to a preset threshold, or when an overlapping area of at least two adjacent sub-regions is greater than or equal to a preset proportion, the at least two adjacent sub-regions are determined as one sub-region.

18. The apparatus as claimed in claim 10, further comprising:
a second acquisition component, configured to acquire a first height, a second height, a third height, and a fourth height, wherein the first height is a surveyed altitude of each object to be operated, the second height is a take-off point altitude of the operation device, the third height is a height of each object to be operated, and the fourth height is a preset height increased on the basis of the height of each object to be operated; and
a calculation component, configured to calculate an actual flying height of the operation device using the first height, the second height, the third height, and the fourth height.

19. A storage medium, comprising a stored program, wherein when the program is run, a device where the storage medium is located is controlled to perform the target region operation planning method as claimed in any one of claims 1 to 9.

20. A processor, configured to run a program, wherein when the program is run, the target region operation planning method as claimed in any one of claims 1 to 9 is performed.
